# EUROPEAN PATENT APPLICATION

(11) **EP 4 814 137 A1**
(43) Date of publication of application: **30.09.2026**
(21) Application number: 23959589.5
(22) Date of filing: 20.12.2023
(51) Int. Cl.: C21D 8/12, C21D 9/46, C22C 38/02, C22C 38/04, C22C 38/06, C22C 38/00

(54) **GRAIN-ORIENTED ELECTRICAL STEEL SHEET AND MANUFACTURING METHOD THEREFOR**

(30) Priority: 24.11.2023 KR 20230166082
(71) Applicant: POSCO Co., Ltd, Gyeongsangbuk-do 37859 (KR)
(72) Inventor: PARK, Jong Ho, Pohang-si, Gyeongsangbuk-do 37859 (KR); LEE, Seunggon, Pohang-si, Gyeongsangbuk-do 37859 (KR); CHOI, Heonjo, Pohang-si, Gyeongsangbuk-do 37859 (KR); NO, Taeyoung, Pohang-si, Gyeongsangbuk-do 37859 (KR)
(74) Representative: Meissner Bolte Partnerschaft mbB
(86) International application number: PCT/KR2023/021130
(87) International publication number: WO 2025/110333

(57) **Abstract**

A method for manufacturing a grain-oriented electrical steel sheet according to an embodiment of the present disclosure includes manufacturing a slab including, in wt%, C: 0.01% to 0.1%, Si: 1.5% to 4.5%, and Mn: 0.1% to 1.5%, with the balance being Fe and inevitable impurities, manufacturing a hot-rolled sheet by hot-rolling the slab, manufacturing a cold-rolled sheet by cold-rolling the hot-rolled sheet, nitride-annealing the cold-rolled sheet, and performing secondary recrystallization annealing on a nitride-annealed steel sheet, wherein after the nitride-annealing process, a ratio (P₂/P₁) of the number of precipitates and inclusions (P₂) present in a center portion exceeding 30% to 70% of the total width of the steel sheet, to the number of precipitates and inclusions (P₁) present in an upper edge portion extending from one end of the steel sheet to 30% of the total width thereof, is 0.6 to 1.0.

## Description

### [Technical Field]

An embodiment of the present disclosure relates to a grain-oriented electrical steel sheet and a method for manufacturing the same. More particularly, an embodiment of the present disclosure relates to a grain-oriented electrical steel sheet and a method for manufacturing the same, which reduces magnetic deviation in a width direction of a steel sheet by appropriately forming precipitates or inclusions in the width direction of the steel sheet during a nitride-annealing process.

### [Background Art]

A grain-oriented electrical steel sheet is a soft magnetic material with excellent magnetic properties in a rolling direction as a result of the so-called Goss texture, in which all the grains of the steel sheet are oriented in a {110} direction and a crystallographic orientation in the rolling direction is parallel to a <001> axis. Generally, magnetic properties of electrical steel sheets can be expressed as magnetic flux density and core loss, and high magnetic flux density can be obtained by precisely arranging grains in the {100}<001> orientation. An electrical steel sheet with high magnetic flux density can contribute to reducing the size of the core material of an electrical device and also has a low hysteresis loss, and thus may contribute to a decrease in size and an increase in efficiency of an electrical device. As used herein, the term "core loss" refers to a loss of power consumed as heat energy when an alternating magnetic field is applied to a steel sheet. The core loss of a steel sheet greatly changes depending on the magnetic flux density and thickness of the steel sheet, the amount of impurities in the steel sheet, and resistivity and recrystallized grain size of the steel sheet. As the magnetic flux density and resistivity of a steel sheet increase and the thickness and impurity content of the steel sheet decrease, the core loss decreases, resulting in an increase in the efficiency of an electrical device.

Currently, in order to combat global warming worldwide by reducing the generation of CO₂, the development of energy-saving and high-efficiency products is ongoing, and as the demand for highly efficient electrical devices that use a reduced amount of electrical energy increases, the demand for grain-oriented electrical steel sheets with superior high-magnetic flux density and low core loss properties increases.

Initially developed grain-oriented electrical steel sheets were manufactured by a two-step cold-rolling process using MnS as a grain growth inhibitor and high-temperature annealing. In this manufacturing method, secondary recrystallized grains were formed relatively stably, but the magnetic flux density (magnetic flux density at B8, 800 A/m) was at the level of 1.80 Tesla, and the core loss was also higher than the current level. Since then, a method has been proposed to manufacture grain-oriented electrical steel sheets having excellent magnetic flux density (B8) of 1.87 Tesla or higher by using AlN and MnS precipitates or inclusions in combination as grain growth inhibitors and performing a single cold rolling, and this method is still used commercially.

In addition, a method for manufacturing electrical steel sheets containing MnS (or MnSe) and Sb by a two-step cold-rolling process was proposed, and a product with a relatively high magnetic flux density was obtained. The three types of technologies mentioned above have in common that they are technologies for finely and uniformly controlling precipitates or inclusions, and thus require high slab-heating temperatures, which cause excessive energy use, an increased equipment damage rate, and a decreased yield in final products.

Instead of the high-temperature slab heating method, an inhibitor necessary for secondary recrystallization was proposed to form (Al, Si)N by infiltrating N into the steel after completion of decarburization annealing and before the start of secondary recrystallization in the final secondary recrystallization annealing (also known as a low-temperature slab heating method). In order to form inhibitors such as AlN, (Al, Si)N using a nitriding gas after completion of decarburization annealing, the nitriding gas must be injected onto a steel sheet through a gas header or a nozzle. In this process, the concentration of the nitriding gas varies along the width direction, leading to unintended variations in nitriding concentration across the width. Even when nitriding is performed at a uniform concentration, the subsequent secondary recrystallization annealing process is conducted in a coil shape for a long duration, making it difficult to uniformly control temperatures at the top, middle, and bottom of the coil. Consequently, deviations in magnetic properties occur along the width direction of the steel sheet.

Furthermore, there is a recent trend toward increasing not only the coil weight but also the coil width to enhance the production efficiency of grain-oriented electrical steel sheets. As such, as the coil width increases, the magnetic deviation along the width direction further intensifies, resulting in a problem of deterioration of the magnetic properties of the entire coil.

### [Disclosure]

### [Technical Problem]

An embodiment of the present disclosure provides a grain-oriented electrical steel sheet and a method for manufacturing the same. More particularly, an embodiment of the present disclosure relates to a grain-oriented electrical steel sheet and a method for manufacturing the same, which reduces magnetic deviation in a width direction of a steel sheet by appropriately forming precipitates or inclusions in the width direction of the steel sheet during a nitride-annealing process.

### [Technical Solution]

A method for manufacturing a grain-oriented electrical steel sheet according to an embodiment of the present disclosure includes manufacturing a slab including, in weight %, C: 0.01% to 0.1%, Si: 1.5% to 4.5%, Mn: 0.1% to 1.5%, with the balance being Fe and inevitable impurities, manufacturing a hot-rolled sheet by hot-rolling the slab, manufacturing a cold-rolled sheet by cold-rolling the hot-rolled sheet, nitride-annealing the cold-rolled sheet, and performing secondary recrystallization annealing on a nitride-annealed steel sheet.

After the nitride-annealing process, a ratio (P₂/P₁) of the number of precipitates and inclusions (P₂) present in a center portion exceeding 30% to 70% of the total width of the steel sheet, to the number of precipitates and inclusions (P₁) present in an upper edge portion extending from one end of the steel sheet to 30% of the total width thereof, is 0.6 to 1.0.

The slab may further include, in wt%, Al: 0.020% to 0.040%, N: 0.0030% to 0.0060%, and S: 0.0030% to 0.0065%.

The slab may further include, in wt%, Sb: 0.01% to 0.04%, Sn: 0.03% to 0.07%, and P: 0.01% to 0.04%.

The slab may satisfy the following Formula 1. $0.0330 \leq \left[P\right] + 0.5 \times \left[Sb\right] \leq 0.062$ (In Formula 1, [P] and [Sb] represent the content (wt%) of P and Sb in the slab, respectively.)

The slab may further include, in wt%, at least one of Cu: 0.001% to 0.1% and Cr: 0.01% to 0.15%.

After the nitride-annealing process, a ratio (P₃/P₁) of the number of precipitates and inclusions (P₃) present in a lower edge portion ranging from more than 70% of the total width from one end of the steel sheet to the other end thereof, to the number of precipitates and inclusions (P₁) present in the upper edge portion, may be 0.7 to 1.0.

In the nitride-annealing process, a ratio (AF₁/AF₂) of a flow rate of ammonia (AF₁) injected into an upper edge portion to a flow rate of ammonia (AF₂) injected into a center portion may be 1.03 to 1.40.

Further, in the nitride-annealing process, a ratio (AF₃/AF₂) of a flow rate of ammonia (AF₃) injected into the lower edge portion to the flow rate of ammonia (AF₂) injected into the center portion may be 1.03 to 1.40. A soaking temperature in the nitride-annealing process may be 820 to 900°C.

Decarburization may be performed simultaneously with nitriding in the nitride-annealing process, and the oxidation degree (P_{H2O}/P_{H2}) of the atmosphere during decarburization may be 0.45 to 0.75.

A grain-oriented electrical steel sheet according to an embodiment of the present disclosure includes, in wt%, C: 0.005% or less (excluding 0%), Si: 1.5% to 4.5%, Mn: 0.1% to 1.5%, with the balance being Fe and inevitable impurities, wherein a ratio (P₂/P₁) of the number of precipitates and inclusions (P₂) present in the center portion exceeding 30% to 70% of the total width of the steel sheet, to the number of precipitates and inclusions (P₁) present in the upper edge portion extending from one end of the steel sheet to 30% of the total width thereof, is 0.6 to 1.0.

The grain-oriented electrical steel sheet according to an embodiment of the present disclosure may include, in wt%, Al: 0.040% or less, N: 0.0050% or less, and S: 0.005% or less.

The grain-oriented electrical steel sheet according to an embodiment of the present disclosure may include, in wt%, Sb: 0.01% to 0.04%, Sn: 0.03% to 0.07%, and P: 0.01% to 0.04%.

The grain-oriented electrical steel sheet according to an embodiment of the present disclosure may satisfy the following Formula 1. $0.0330 \leq \left[P\right] + 0.5 \times \left[Sb\right] \leq 0.062$ (wherein, in Formula 1, [P] and [Sb] represent the content (wt%) of P and Sb in the steel sheet, respectively.)

The grain-oriented electrical steel sheet according to an embodiment of the present disclosure may include, in wt%, at least one of Cu: 0.001% to 0.1% and Cr: 0.01% to 0.15%.

In the grain-oriented electrical steel sheet according to an embodiment of the present disclosure, a ratio (P₃/P₁) of the number of precipitates and inclusions (P₃) present in the lower edge portion ranging from more than 70% of the total width from one end of the steel sheet to the other end thereof, to the number of precipitates and inclusions (P₁) present in the upper edge portion, may be 0.7 to 1.0.

### [Advantageous Effects]

The grain-oriented electrical steel sheet according to an embodiment of the present disclosure may reduce magnetic deviation in the width direction of the steel sheet and uniformly improve magnetic properties in the width direction of the steel sheet.

### [Description of the Drawings]

FIG. 1 is a schematic diagram illustrating a grain-oriented electrical steel sheet according to an embodiment of the present disclosure.
FIG. 2 is a schematic diagram illustrating a coil-shaped steel sheet during performing of secondary recrystallization annealing in an embodiment of the present disclosure.

### [Mode for Invention]

It should be understood that, although the terms "first," "second," "third," etc. may be used herein to describe various elements, components, regions, layers, and/or sections, they are not limited thereto. These terms are only used to distinguish one element, component, region, layer, or section from another element, component, region, layer, or section. Therefore, a first part, component, area, layer, or section to be described below may be referred to as a second part, component, area, layer, or section within the range of the present disclosure.

The technical terms used herein are to simply mention a particular embodiment and are not meant to limit the present disclosure. An expression used in the singular encompasses an expression of the plural, unless it has a clearly different meaning in the context. In the specification, it should be understood that terms such as "including," "having," etc., are intended to indicate the existence of specific features, regions, numbers, stages, operations, elements, components, and/or combinations thereof disclosed in the specification, and are not intended to preclude the possibility that one or more other features, regions, numbers, stages, operations, elements, components, and/or combinations thereof may exist or may be added.

When reference is made to a part being "on" or "above" another part, it may be positioned directly on or above the other part, or another part may be interposed therebetween. In contrast, when reference is made to a part being "directly above" another part, no other part is interposed therebetween.

Unless otherwise stated, all terms used herein, including technical or scientific terms, have the same meanings as those that would be generally understood by those with ordinary knowledge in the field of art to which the present disclosure belongs. Terms defined in commonly used dictionaries may be further interpreted as having meanings consistent with the relevant technical literature and the present disclosure, and are not to be construed as having idealized or very formal meanings unless stated otherwise.

Unless otherwise stated, % means wt%, and 1 ppm is 0.0001 wt%.

In an embodiment of the present disclosure, inclusion of an additional element means replacing the balance of iron (Fe) by an additional amount of the additional element.

The present disclosure will be described more fully hereinafter with reference to the accompanying drawings, in which embodiments of the invention are shown. As those skilled in the art would realize, the described embodiments may be modified in various different ways, all without departing from the spirit or scope of the present invention.

A method for manufacturing a grain-oriented electrical steel sheet according to an embodiment of the present disclosure includes manufacturing a slab including, in wt%, C: 0.01% to 0.1%, Si: 1.5% to 4.5%, Mn: 0.1% to 1.5%, with the balance being Fe and inevitable impurities, manufacturing a hot-rolled sheet by hot-rolling the slab, manufacturing a cold-rolled sheet by cold-rolling the hot-rolled sheet, nitride-annealing the cold-rolled sheet, and performing secondary recrystallization annealing on a nitride-annealed steel sheet.

Below, each step is described in detail.

First, the slab is manufactured.

The slab includes, in wt%, C: 0.01% to 0.1%, Si: 1.5% to 4.5%, and Mn: 0.1% to 1.5%, with the balance being Fe and inevitable impurities.

Below, the reasons for limiting the amount added for each element will be described.

### C: 0.01 to 0.10 wt%

Carbon (C) is an element that promotes austenite phase transformation; it is an essential element for manufacturing grain-oriented electrical steel sheets with excellent magnetic properties by uniformizing the hot-rolled microstructure and promoting the formation of Goss-oriented grains during cold rolling. If too little C is added, the above-mentioned effects cannot be sufficiently obtained. Additionally, secondary recrystallization may be formed unstably due to the non-uniform hot rolling structure. If too much C is added, the primary recrystallized grains become fine due to the formation of fine hot-rolled structures caused by austenite phase transformation during hot rolling, and coarse carbides may be formed during the coiling process after hot rolling or the cooling process after hot-rolled sheet annealing, and Fe₃C (cementite) may be formed at room temperature, easily causing unevenness in the structure. In addition, the time required to decarburize to below 30 ppm in the decarburization process after cold rolling increases, which causes excessive formation of fayalite and silica on the surface on the steel sheet. Therefore, the content of C may be included in an amount of 0.01 to 0.10 wt%. More specifically, C may be included in an amount of 0.03 to 0.08 wt%.

C is removed by decarburization during the nitride-annealing process, and may be included in the final manufactured grain-oriented electrical steel sheet at 0.005 wt% or less. More specifically, C may be included in an amount of 0.003 wt% or less. More specifically, C may be included in an amount of 0.0001 to 0.0030 wt%.

### Si: 1.5 wt% to 4.5 wt%

Silicon (Si) is a basic component of electrical steel and increases the resistivity of the material, thereby reducing core loss. If too little Si is added, the resistivity decreases, the eddy-current loss reduction effect is weak, and the amount of fayalite formed during the decarburization process becomes insufficient, which may destabilize the formation of the forsterite film. Conversely, if too much Si is added, the steel becomes more brittle, making cold rolling difficult, and the surface quality may deteriorate as a large amount of fayalite is formed during the decarburization process. Therefore, Si may be included in an amount of 1.5 wt% to 4.5 wt%. More specifically, Si may be included in an amount of 2.5 wt% to 3.8 wt%.

### Mn: 0.1 wt% to 1.5 wt%

Manganese (Mn) has the effect of increasing resistivity and reducing core loss, similar to Si. However, if a large amount of Mn is added, rather than reducing core loss by increasing resistivity, the saturation magnetic flux density is reduced and the grain growth inhibition is weakened by the formation of coarse MnS precipitates or inclusions, which reduces the magnetic flux density after secondary recrystallization annealing, and also affects the fayalite and silica components formed during the decarburization process, thereby hindering the formation of a good forsterite film.

Therefore, it is necessary to optimize the Mn content in order to form a forsterite film with excellent adhesion and high magnetic flux density. If too little Mn is added, the burden of refining during steelmaking increases, and the amount of fine MnS precipitates that can be utilized to suppress crystal growth may be reduced. If too much Mn is added, it promotes coarse MnS precipitation, causing the slab to be heated to 1150°C or higher to dissolve the MnS precipitates or inclusions. Furthermore, excessive Mn addition may hinder the formation of high-quality fayalite and silica during the decarburization process.

The slab may further include, in wt%, Al: 0.020% to 0.040%, N: 0.0030% to 0.0060%, and S: 0.0030% to 0.0065%.

### Al: 0.020 wt% to 0.040 wt%

Aluminum (Al) combines with nitrogen (N) to form AlN precipitates or inclusions, and is a representative component of grain growth inhibitors for the formation of secondary recrystallization in grain-oriented electrical steel sheets. In an embodiment of the present disclosure, by forming (Al, Si, Mn)N precipitates or inclusions through nitride-annealing after cold rolling, a grain-growth suppression effect is secured, and in particular, by controlling precipitates or inclusions in the width direction of the steel, the magnetic deviation in the width direction is reduced. In the steelmaking step, Al is preferably added in an amount of 0.020 wt% to 0.040 wt%; if the Al content is too low, the total amount of (Al, Si, Mn)N precipitates or inclusions formed during primary recrystallization and nitride-annealing may be insufficient, leading to inadequate inhibition of primary grain growth. Conversely, if too much Al is added, coarse microstructures may be formed during nitride-annealing as precipitates or inclusions grow coarsely during slab manufacturing and hot-rolling processes, which may make secondary recrystallization unstable during the subsequent secondary recrystallization annealing process. Therefore, the Al content in the slab may be 0.020 wt% to 0.040 wt%. More specifically, the Al content may be 0.020 wt% to 0.035 wt%.

During the secondary recrystallization annealing process, some of the Al may be removed through purification annealing, and the final grain-oriented electrical steel sheet may include 0.040 wt% or less of Al. More specifically, Al may be included in an amount of 0.010 wt% to 0.040 wt%.

### N: 0.0030 wt% to 0.0060 wt%

Nitrogen (N) is an important element that reacts with Al to form AlN precipitates or inclusions, which inhibit grain growth. In a manufacturing method that secures (Al, Si, Mn)N precipitates or inclusions through nitriding after cold rolling, there is no need for the steel to contain a high N content in the steelmaking step. However, if too little N is added, fine AlN precipitates or inclusions are formed during the slab manufacturing step, resulting in a fine primary recrystallized grain size and facilitating secondary recrystallization of grains with the exact Goss orientation. Conversely, if too much N is added, coarse AlN precipitates or inclusions are formed during the slab manufacturing step, creating a coarse primary recrystallization microstructure and making secondary recrystallization unstable. Therefore, the range of N may be limited to 0.0030 wt% to 0.0060 wt%. More specifically, N may be included in an amount of 0.0035 wt% to 0.0055 wt%.

On the other hand, in an embodiment of the present disclosure, by controlling the ammonia input flow rate in the width direction of the steel sheet during the nitride-annealing process, (Al, Si, Mn)N precipitates or inclusions may be precipitated differently in the width direction of the steel sheet, thereby reducing the magnetic deviation in the width direction of the steel sheet.

Specifically, in the nitride-annealing process, a ratio (AF₁/AF₂) of a flow rate of ammonia (AF₁) injected into the upper edge portion to a flow rate of ammonia (AF₂) injected into the center portion may be 1.03 to 1.40.

Further, in the nitride-annealing process, a ratio (AF₃/AF₂) of a flow rate of ammonia (AF₃) injected into the lower edge portion to the flow rate of ammonia (AF₂) injected into the center portion may be 1.03 to 1.40.

Further, in the nitride-annealing process, a ratio (AF₃/AF₁) of a flow rate of ammonia (AF₃) injected into the lower edge portion to the flow rate of ammonia (AF₁) injected into the upper edge portion may be 0.85 to 1.15.

The inventors of the present disclosure can control the flow rate of ammonia injected in the width direction by adjusting the position of the ammonia injection pipe during the nitride-annealing. In an embodiment of the present disclosure, the flow rate of ammonia refers to the mass of ammonia injected per unit area and per unit time.

By controlling the amount of ammonia injected into each section of the steel sheet within the aforementioned range, the precipitates or inclusions formed in each section can be precisely controlled. That is, by providing independent ammonia pipes for the upper edge portion, lower edge portion, and center portion and individually adjusting the ammonia flow rate, the nitrification amount and the precipitates or inclusions in each portion can be controlled as described above. The aforementioned adjustment of the ammonia input amount is merely examplary, and the precipitates or inclusions at each location may be further controlled by regulating the oxidation degree in the width direction and adjusting the annealing time and annealing temperature.

After the nitride-annealing process, the amount of nitrogen in the steel sheet may range from 0.0135 wt% to 0.028 wt%.

During the secondary recrystallization annealing process, a portion of the N may be removed through purification annealing, and the final grain-oriented electrical steel sheet may include N in an amount of 0.005 wt% or less. More specifically, N may be included in an amount of 0.001 to 0.005 wt%.

### S: 0.0030 wt% to 0.0065 wt%

Sulfur (S) generally functions as an inhibitor that suppresses the growth of primary recrystallized grains by reacting with Mn and Cu to form MnS or Cu₂S precipitates. To secure fine MnS precipitates, the added Mn and S should be substantially dissolved under slab heating conditions of 1150°C or less, thereby functioning as effective inhibitors. Therefore, it is desirable to add Mn within a range of the content of S that can react with the amount of Mn added. The addition of too little S may result in a deficiency of MnS precipitates, thereby making it difficult to ensure suppression power. If too much S is added, complete solid solution becomes difficult, which may lead to the formation of coarse MnS precipitates. In addition, S is an element that is prone to grain boundary or surface segregation, and especially during high-temperature annealing, S diffuses to the surface of the steel sheet, causing surface segregation that interferes with the formation of a forsterite film-a product of the reaction between fayalite, silica, and MgO-thereby degrading the adhesion of the forsterite film. Accordingly, S may be included in amount of 0.0030 wt% to 0.0065 wt%. More specifically, it may be included in amount of 0.0040 wt% to 0.0065 wt%. During the secondary recrystallization annealing process, a portion of the N may be removed through purification annealing, and the final grain-oriented electrical steel sheet may contain S at 0.005 wt% or less. More specifically, it may be included in an amount of 0.001 wt% to 0.005 wt%.

The slab may further include, by wt%, Sb: 0.01% to 0.04%, Sn: 0.03% to 0.07%, and P: 0.01% to 0.04%.

### Sb: 0.01 wt% to 0.04 wt%

Antimony (Sb) segregates to grain boundaries and acts to suppress the excessive growth of primary recrystallized grains. Therefore, if more Sb is added, it may have a favorable effect on magnetic properties. If too little Sb is added, the aforementioned effects cannot be sufficiently obtained. Conversely, excessive addition of Sb may excessively refine the primary recrystallized grains, thereby lowering the onset temperature of secondary recrystallization and deteriorating the magnetic properties. Alternatively, if grain growth inhibition becomes unduly high, it may impede the very formation of secondary recrystallization. Therefore, when more Sb is added, it may be added in an amount of 0.01 wt% to 0.04 wt%. More specifically, it may be included in an amount of 0.015 wt% to 0.035 wt%.

### Sn: 0.03 wt% to 0.07 wt%

Tin (Sn) is an excellent auxiliary grain-growth inhibitor that segregates at grain boundaries and inhibits grain-boundary movement. This compensates for the weakened grain growth inhibition resulting from the coarsening of AlN particles and the increase in Si content. Therefore, successful formation of {110}<001> secondary recrystallization texture can be ensured, even with a relatively high Si content. That is, the Si content can be increased and the final thickness can be reduced without compromising the perfection of the {110}<001> secondary recrystallization structure.

Therefore, further addition of Sn can have a beneficial effect on magnetic properties. If the Sn content is too low, the aforementioned effects cannot be sufficiently obtained. Conversely, if an excessive amount of Sn is added, the brittleness of the steel sheet may increase. Therefore, when Sn is further added, it may be added in an amount of 0.03 wt% to 0.07 wt%. More specifically, it may be included in an amount of 0.04 wt% to 0.06 wt%.

### P: 0.01 wt% to 0.04 wt%

Phosphorus (P) promotes the growth of primary recrystallized grains, thereby increasing the secondary recrystallization temperature and serving to enhance the degree of {110}<001> texture orientation in the final product. While excessively large primary recrystallized grains may render secondary recrystallization unstable, having larger primary grains is beneficial for magnetic properties by raising the secondary recrystallization temperature, provided that secondary recrystallization occurs. On the other hand, P not only lowers the core loss of the final product by increasing the number of grains with {110}<001> orientation in the primary recrystallized steel sheet, but also enhances the magnetic flux density by strongly developing the {111}<112> texture, which improves the {110}<001> orientation in the final product. Furthermore, P functions to strengthen growth inhibition by segregating at grain boundaries even at high temperatures near 1000°C, thereby retarding the dissolution of precipitates and inclusions during secondary recrystallization annealing. Therefore, if more P is added, it may have a favorable effect on magnetic properties. If the P content is too low, the aforementioned effects cannot be sufficiently obtained. Conversely, if an excessive amount of P is added, the size of the primary recrystallized grains may decrease, which not only renders secondary recrystallization unstable but also increases brittleness, thereby hindering cold rollability. Therefore, when P is further added, it may be added in an amount of 0.01 wt% to 0.04 wt%. More specifically, it may be included in an amount of 0.015 wt% to 0.035 wt%.

The slab may satisfy the following Formula 1. $0.0330 \leq \left[P\right] + 0.5 \times \left[Sb\right] \leq 0.062$ (wherein, in Formula 1, [P] and [Sb] represent the content (wt%) of P and Sb, respectively, in the slab.)

When Formula 1 is satisfied, the improvement in core loss is further enhanced due to the synergistic effect resulting from the simultaneous addition of P and Sb. If the value of Formula 1 is too small, an insufficient effect is obtained for the formation of primary or secondary recrystallized grains. If the value of Formula 1 is too large, it may be difficult to control the primary recrystallized grain size and may also hinder cold rollability. More specifically, the value of Formula 1 may be 0.035 to 0.060.

The slab may further include, in wt%, one or more of Cu: 0.001% to 0.1% and Cr: 0.01% to 0.15%. More specifically, the slab may further include, in wt %, Cu: 0.001% to 0.1% and Cr: 0.01% to 0.1%.

### Cu: 0.001 wt% to 0.1 wt%

Copper (Cu) generally functions as an inhibitor that suppresses the growth of primary recrystallized grains by reacting with S to form Cu₂S precipitates. When added together with Mn, Cu forms [MnCu]S complex precipitates, thereby influencing the size of MnS precipitates or inclusions. If too little Cu is added, the formation of Cu₂S precipitates is insufficient, which may result in a limited effect as an inhibitor. Conversely, if an excessive amount of Cu is added, it precipitates with S in the steel before Mn, making it impossible to obtain the fine MnS precipitates intended in the present disclosure. Therefore, it is desirable to limit the Cu content to a range of 0.001 wt% to 0.100 wt%. More specifically, it may be included in amount of 0.010 wt% to 0.070 wt%.

### Cr: 0.01 wt% to 0.15 wt%

Chromium (Cr) is the element that reacts most rapidly with oxygen to form Cr₂O₃ on the surface of the steel sheet. Through this, the carbon in the steel rapidly diffuses to the surface of the steel sheet and reacts with oxygen in the atmospheric gas to form CO gas, thereby promoting decarburization. If too little Cr is added, the aforementioned effects cannot be sufficiently obtained. If an excessive amount of Cr is added, it may not have a significant effect on the formation of the surface oxide layer. Therefore, the amount of Cr added is limited to 0.01 wt% to 0.15 wt%. More specifically, it may contain 0.03 wt% to 0.12 wt%.

Iron (Fe) is included as balance. Additionally, inevitable impurities may be included. The inevitable impurities refer to impurities that are inevitably mixed in during the manufacturing process of steelmaking and grain-oriented electrical steel sheets. Since the inevitable impurities are widely known, a detailed description will be omitted. In an embodiment of the present disclosure, the addition of elements other than the alloy components described above is not excluded, and various elements may be included within a range that does not depart the technical idea of the present disclosure. In a case where additional elements are further included, they are included by substituting the balance of Fe. For example, it is possible to include at least one component among Ni, Mo, Zr, Bi, Pb, As, Ge, and Ga in the steel within the component range of the present disclosure.

Returning to the description of the manufacturing process, the slab is heated to 1150°C or lower. The slab may be produced by the ingot method, continuous casting method, and thin slab casting or strip casting. In the case of the ingot method, continuous casting, and thin slab casting, the slab is manufactured and then slab heating and hot rolling are performed in a subsequent process.

Since slab heating is essentially based on a method for manufacturing grain-oriented electrical steel sheet that secures (Al, Si, Mn)N precipitates through decarburization and nitride-annealing after cold rolling-providing the main AlN-based grain growth inhibitors required for Goss-orientation secondary recrystallization-the slab may be heated to 1150°C or less and then hot rolled. In order to facilitate the formation of the fine MnS as an auxiliary grain growth inhibitor during the slab heating and hot-rolling processes, the amount of Mn and S added was limited in the steelmaking step such that the solid solution temperature of the MnS precipitates formed by the reaction of the added Mn and S is 1150°C or lower.

If the slab is heated at an excessively high temperature, AlN precipitates formed during the solidification process in the slab manufacturing step are excessively dissolved in the slab heating step and are finely precipitated during the subsequent hot-rolling process, which refines the grain size during the hot rolling and decarburization processes, thereby hindering the formation of secondary recrystallization of exact Goss orientation grains. While it is preferable to maintain the slab reheating temperature as low as possible within a range that allows for the complete solid solution of MnS precipitates-depending on the added Mn and S content-the slab may specifically be heated at a temperature ranging from 1,000°C to 1,150°C in consideration of the hot rolling load.

### Next, the slab is hot rolled to produce a hot-rolled sheet.

Hot rolling is performed to a thickness of 1.0 to 3.5 mm. In consideration of the rolling load, the hot rolling may be terminated at a temperature of 850°C or higher, followed by cooling and coiling at a temperature of 600°C or lower.

The hot-rolled steel sheet is subjected to a hot-rolled sheet annealing process to recrystallize the deformed structure resulting from hot rolling. This process facilitates the subsequent cold-rolling process, enabling smooth reduction to the final product thickness. In general, it is desirable to heat the hot-rolled sheet to a temperature of 800°C or higher and maintain it for a certain period of time to induce recrystallization. Additionally, annealing at multiple temperatures is possible to control the distribution and size of precipitates or inclusions. The annealing of the hot-rolled sheet may be omitted as necessary.

### Next, the hot-rolled sheet is cold-rolled to produce a cold-rolled sheet.

The hot-rolled sheet is subjected to pickling to remove an oxide layer from the surface thereof, and cold rolling is subsequently performed. Cold rolling is a process to reduce the thickness of the steel sheet to a final product thickness. It is performed by one cold rolling or at least two cold rollings including an intermediate annealing to achieve the final product thickness. At this time, the cold-rolling rate influences the improvement of magnetic flux density after final secondary recrystallization annealing by strengthening the intensity of the Goss orientation; therefore, cold rolling may be performed at a rolling rate of at least 80%. If the cold-rolling rate is too low, the Goss orientation density decreases, resulting in a low magnetic flux density in the final product. Therefore, the cold-rolling rate is maintained at a minimum of 80%, while the maximum rolling rate may extend to the maximum achievable range, depending on the rolling capacity of the rolling equipment. Furthermore, increasing the temperature of the steel sheet to 50°C or higher during the cold-rolling process promotes work hardening by solute carbon, which in turn induces the formation of a large number of secondary recrystallization nuclei for the Goss orientation, thereby improving the magnetic flux density of the final product. If the temperature of the cold-rolled steel sheet is too low, the occurrence of secondary recrystallization nuclei in the Goss orientation is minimal. Conversely, if it exceeds 300°C, the work hardening effect due to the dissolved carbon is weakened, and the occurrence of secondary recrystallization nuclei in the Goss orientation is weakened. Therefore, in the cold-rolling process, the steel sheet may be maintained in a temperature range of 50 to 300°C at least once during the intermediate rolling step. After cold rolling, the thickness of the cold-rolled sheet may be 0.10 to 0.35 mm.

### Next, the cold-rolled sheet is nitride-annealed.

In an embodiment of the present disclosure, by applying different process conditions in the width direction of the steel sheet during the nitride-annealing process, the arrangement characteristics of precipitates or inclusions vary in the width direction of the steel sheet, thereby reducing the magnetic deviation in the width direction of the steel sheet.

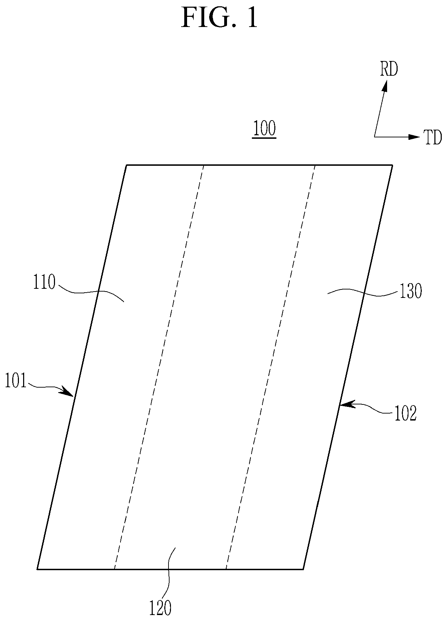

FIG. 1 is a schematic diagram illustrating a grain-oriented electrical steel sheet according to an embodiment of the present disclosure. As shown in FIG. 1, the grain-oriented electrical steel sheet according to an embodiment of the present disclosure may be divided into an upper edge portion 110, a center portion 120, and a lower edge portion 130 along the width direction (or rolling vertical direction, TD direction) of the steel sheet.

The upper edge portion 110 refers to a portion from one end 101 of the steel sheet to 30% of the total width of the steel sheet in the width direction of the steel sheet. The center portion 120 refers to a portion from one end 101 of the steel sheet to more than 30% to 70% of the total width of the steel sheet. The edge portion 130 refers to a portion from more than 70% of the total width of the steel sheet at one end 101 of the steel sheet to the other end 102 of the steel sheet.

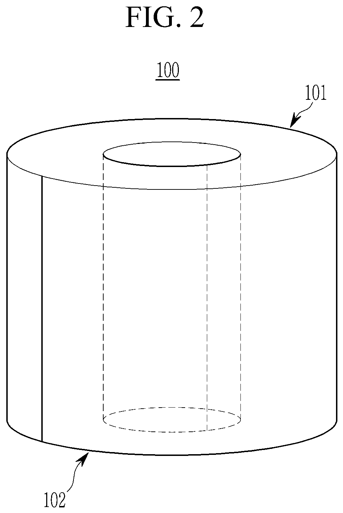

FIG. 2 schematically illustrates a coil-shaped steel sheet, wherein the steel sheet is coiled for long-term annealing in a secondary recrystallization annealing step to be described later.

The one end 101 in FIG. 1 corresponds to the upper end 101 of the coil, and the other end 102 in FIG. 2 corresponds to the lower end 102 of the coil. The lower portion 102 of the coil is in contact with the bottom surface during secondary recrystallization annealing, resulting in a relatively low temperature. In contrast, the upper portion 101 of the coil maintains a relatively high temperature without such heat loss. As described above, when the steel sheet is coiled and annealed for a long period of time during the secondary recrystallization annealing, a temperature gradient inevitably occurs in the width direction of the steel sheet. Such a temperature gradient leads to a magnetic deviation in the width direction of the steel sheet.

In an embodiment of the present disclosure, a relatively large amount of precipitates or inclusions are formed at the upper edge portion 110 in response to the temperature gradient, thereby reducing the magnetic deviation in the width direction of the steel sheet and ultimately ensuring consistent magnetic properties in the width direction.

Specifically, after the nitride-annealing process, the ratio (P₂/P₁) of the number of precipitates and inclusions (P₂) present in the center portion 120 to the number of precipitates and inclusions (P₁) present in the upper edge portion 110 is 0.6 to 1.0. Here, precipitates and inclusions refer to particles formed by the agglomeration of one or more elements among C, Si, Mn, Al, Cu, N, O, and S within the steel sheet. When analyzing a steel sheet cross-section using elemental analysis, regions with a higher concentration of elements compared to the steel component of the steel sheet substrate appear in particulate form are considered precipitates or inclusions. Precipitates or inclusions are defined as those having a particle size of at least 1 nm and up to 10 µm. Since particles smaller than this range do not function significantly, only precipitates or inclusions with a particle size of 1 nm or more are included in the particle count in an embodiment of the present disclosure. In this case, the particle size refers to the diameter of a circle with the same area as that occupied by the precipitate or inclusion on the measured cross-section of the steel sheet.

In an embodiment of the present disclosure, precipitates refer to nitrides, carbides, or sulfides newly formed in stable phases during melting or manufacturing of electrical steel sheet. In contrast, inclusions refer to spinel oxides such as Al₂O₃ or MgAl₂O₄ formed when nitrides such as AlN formed during the nitride-annealing process react with oxygen or other elements in an annealing furnace during secondary recrystallization annealing.

Various methods exist for analyzing precipitates or inclusions; however, in an embodiment of the present disclosure, analysis is performed using the conventional replica method. Images of at least 10 fields are obtained at the 1/4t position of the steel sheet thickness, and the area is analyzed using an image analyzer. The formation sites of precipitates or inclusions within grain boundaries immediately below the oxidation layer can be analyzed by obtaining at least 10 images using a scanning electron microscope (SEM) or transmission electron microscope (TEM) at the same scale, followed by area analysis via an image analyzer.

When precipitates or inclusions exist across the upper edge portion 110 and the center portion 120, it is assigned to the portion where it occupies a larger area. Representative examples of precipitates or inclusions may include (Al, Si, Mn)N and (Mn, Cu)(S, Se). In an embodiment of the present disclosure, by appropriately controlling the ratio (P₂/P₁) of the number of precipitates or inclusions, it is possible to delay secondary recrystallization in the upper edge portion 110-which has a higher relative temperature and reaches the soaking temperature more quickly-while expediting it in the center portion 120, where the temperature is lower and rises more slowly. This ensures that secondary recrystallization is uniformly achieved in the width direction. If the ratio (P₂/P₁) of the number of precipitates and inclusions is too high, it is difficult to sufficiently obtain the aforementioned effects of controlling secondary recrystallization. If the ratio (P₂/P₁) of the number of precipitates and inclusions is too small, secondary recrystallization of the upper edge portion 110 may be too delayed, which may result in a magnetic deviation in the width direction. More specifically, the ratio (P₂/P₁) of the number of precipitates and inclusions may be 0.6 to 1.0.

Similar to the center portion 120, the lower edge portion 130 comes into contact with the bottom surface during the secondary recrystallization annealing process. Consequently, the temperature is relatively low, and secondary recrystallization occurs later than in the upper edge portion 110.

In an embodiment of the present disclosure, a relatively large amount of precipitates or inclusions are formed at the upper edge portion 110 in response to the temperature gradient, thereby reducing the magnetic deviation in the width direction of the steel sheet.

Specifically, after the nitride-annealing process, the ratio (P₃/P₁) of the number of precipitates and inclusions (P₃) in the lower edge portion 130 to the number of precipitates and inclusions (P₁) present in the upper edge portion 110 may be 0.7 to 1.0. In an embodiment of the present disclosure, by appropriately controlling the ratio (P₃/P₁) of the number of precipitates or inclusions, it is possible to delay secondary recrystallization in the upper edge portion 110-where the temperature is relatively high and reaches the soaking temperature more quickly-while expediting it in the lower edge portion 130, where the temperature is lower and rises more slowly. This ensures that secondary recrystallization is uniformly achieved in the width direction. If the ratio (P₃/P₁) of the number of precipitates and inclusions is too high, it is difficult to sufficiently obtain the aforementioned effects of controlling secondary recrystallization. If the ratio (P₃/P₁) of the number of precipitates and inclusions is too small, secondary recrystallization of the upper edge portion 110 may be too delayed, which may result in a magnetic deviation in the width direction. More specifically, the ratio (P₃/P₁) of the number of precipitates and inclusions may be 0.75 to 0.99.

There may be a temperature difference between the lower edge portion 130 and the center portion 120 during the secondary recrystallization annealing process, and secondary recrystallization in the center portion 120 may be delayed relative to that in the lower portion 130.

In an embodiment of the present disclosure, a relatively large amount of precipitates or inclusions are formed at the upper edge portion 110 in response to the temperature gradient, thereby reducing the magnetic deviation in the width direction of the steel sheet.

Specifically, after the nitride-annealing process, the ratio (P₂/P₃) of the number of precipitates and inclusions (P₂) present in the center portion 120 to the number of precipitates or inclusions (P₃) present in the lower edge portion 130 may be 0.7 to 1.0. In an embodiment of the present disclosure, by appropriately controlling the ratio (P₂/P₃) of the number of precipitates or inclusions, it is possible to delay secondary recrystallization in the center portion 120-which has a relatively higher temperature and reaches the soaking temperature more quickly-while expediting it in the lower edge portion 130, where the temperature is lower and rises more slowly. This ensures that secondary recrystallization is uniformly achieved in the width direction. If the ratio (P₂/P₃) of the number of precipitates and inclusions is too high, it is difficult to sufficiently obtain the aforementioned effects of controlling secondary recrystallization. If the ratio (P₂/P₃) of the number of precipitates and inclusions is too small, secondary recrystallization of the center portion 120 may be too delayed, which may result in a magnetic deviation in the width direction. More specifically, the ratio (P₂/P₃) of the number of precipitates and inclusions may be 0.75 to 0.98.

More specifically, after the nitride-annealing process, the density of precipitates and inclusions (P₁) present in the upper edge portion 110 may be 0.01 to 0.8 particles/cm². More specifically, it may be 0.3 to 0.8 particles/cm².

The density of precipitates and inclusions (P₂) present in the center portion 120 may be 0.01 to 0.50 particles/cm². More specifically, it may be 0.3 to 0.48 particles/cm².

The density of precipitates and inclusions (P₃) present in the lower edge portion 130 may be 0.01 to 0.8 particles/cm². More specifically, it may be 0.3 to 0.8 particles/cm².

There is no specific limitation on the method for adjusting the number of precipitates or inclusions in the width direction. For example, methods such as controlling the ammonia flow rate or varying the annealing time and temperature to promote the formation of precipitates or inclusions in the width direction are also possible. In addition, it is possible to employ methods such as installing a screen to change the flow of atmospheric gas in the annealing furnace.

The soaking temperature in the nitride-annealing process may be 820 to 900°C. If the temperature is too low, even if the predetermined amount of oxygen is reached, there may be a shortage of Fe-based oxides (Fe₂SiO₄ or FeSiO₃) that are crucial for the stable formation of a forsterite film as an oxide quality, or the density of the oxide may be insufficient. While excessively high temperatures are favorable for the density of the oxide layer and the formation of Fe-based oxides, they may compromise decarburization due to the nature of the initially formed oxides. The soaking temperature may include two stages, wherein the first soaking temperature may be configured at 830 to 860°C, and the second soaking temperature may be configured at 850 to 890°C. In this case, the quality of the oxide can be further improved.

Decarburization is performed simultaneously with nitriding in the nitride-annealing process, and the oxidation degree (P_{H2O}/P_{H2}) of the atmosphere during the decarburization process may be 0.45 to 0.75. If the oxidation degree is low, it is difficult for oxidation or decarburization to occur sufficiently. If the oxidation degree is too high, FeO may form rapidly on the outermost layer of the oxide film, resulting in an unstable oxide with rapid formation. More specifically, the oxidation degree may be 0.48 to 0.75.

After nitride-annealing is performed, the amount of nitrogen in the steel sheet may be 0.0135 wt% to 0.0280 wt%.

If the amount of nitrogen is too low, it is difficult for it to function sufficiently as an inhibitor until secondary recrystallization begins. Excessive nitrogen leads to the overformation of nitrides, which not only inhibits normal secondary recrystallization but also causes coating defects such as bare spots due to N₂ gas released during the purification process following secondary recrystallization. More specifically, the amount of nitrogen in the steel sheet may be 0.0150 wt% to 0.0250 wt%.

In addition, the amont of precipitates or inclusions within the grain boundaries directly beneath the SiO₂-based oxide, formed under the aforementioned decarburization conditions, must be maintained at 15% or less of the total precipitates or inclusions. The precipitates or inclusions precipitated at the grain boundaries and within the grains of the decarburized sheet mainly include Al-based nitrides, as well as nitrides, oxides, or sulfides combined with Si, Cu, Sb, Mo, B, and Mn. As is well known, these precipitates or inclusions must be decomposed through a phenomenon of secondary recrystallization during secondary recrystallization annealing, and subsequently removed from the steel through a purification process. If the precipitates or inclusions within the grain boundaries directly beneath the oxide exceed 15% of the total, it indicates that excessive precipitates or inclusions are formed within the grain boundaries. This affects the initiation temperature of secondary recrystallization formation in secondary recrystallization annealing, which leads to non-uniform magnetic properties; therefore, this concentration is limited. In particular, as the coil width increases, the coil edge portion may undergo active oxidation and nitriding reactions compared to the center portion due to the influence of the annealing temperature and the atmosphere flow in the annealing furnace. Therefore, for final products with a coil width of 1050 mm or more, it is necessary to maintain the amount of precipitates or inclusions within the grain boundaries directly beneath the oxide after decarburization at 15% or less of the total precipitates or inclusions. In an embodiment of the present disclosure, the term "directly beneath the oxide" refers to the region from the surface oxide layer to the 1/4t point in the thickness direction of the steel sheet.

Next, the nitride-annealed steel sheet is subjected to secondary recrystallization annealing.

The nitride-annealed steel sheet is coated with an MgO-based annealing separator and then heated to 1000°C or higher for a long-term soaking to cause secondary recrystallization, thereby forming a Goss orientation texture in which the {110} plane of the steel sheet is parallel to the rolling surface and the <001> direction is parallel to the rolling direction.

During secondary recrystallization annealing, the steel sheet is wound into a coil shape and undergoes long-term annealing, and the coil shape is described with reference to FIG. 2. Secondary recrystallization annealing may be performed at a temperature of 1170 to 1220°C for 1 to 25 hours.

After secondary recrystallization annealing, the annealing separator is removed by water washing and pickling. Then, after applying an insulation coating, heat flattening is performed to simultaneously achieve coating curing, shape flattening, and stress relief.

A grain-oriented electrical steel sheet according to an embodiment of the present disclosure includes, in wt%, C: 0.005% or less (excluding 0%), Si: 1.5% to 4.5%, Mn: 0.1% to 1.5%, with the balance being Fe and inevitable impurities, wherein a ratio (P₂/P₁) of the number of precipitates and inclusions (P₂) present in a center portion exceeding 30% to 70% of the total width of the steel sheet, to the number of precipitates and inclusions (P₁) present in an upper edge portion extending from one end of the steel sheet to 30% of the total width thereof, is 0.6 to 1.0.

Since the steel component of the grain-oriented electrical steel sheet has been described in the steel component of the slab in the method for manufacturing a grain-oriented electrical steel sheet mentioned above, a duplicate description will be omitted.

As described above, in the method for manufacturing a grain-oriented electrical steel sheet, the magnetic deviation in the width direction of the steel sheet is reduced by precipitating precipitates or inclusions differently in the width direction of the steel sheet during the nitride-annealing process. After nitride-annealing, precipitates or inclusions are decomposed during the secondary recrystallization annealing process, but some precipitates or inclusions remain in the final grain-oriented electrical steel sheet.

In this process, the precipitates and inclusions are uniformly distributed throughout the width of the steel sheet. As a result, the relative ratio of precipitates and inclusions in the upper edge portion 110, center portion 120, and lower edge portion 130 remains substantially constant after nitride-annealing through to the final grain-oriented electrical steel sheet. The ratio of precipitates and inclusions between the upper edge portion 110, the center portion 120, and the lower edge portion 130 has been described in the method for manufacturing a grain-oriented electrical steel sheet described above, so a duplicate description is omitted.

More specifically, in the final grain-oriented electrical steel sheet, the density of precipitates and inclusions (P₁) present in the upper edge portion 110 may be 0.001 to 0.55 particles/cm². More specifically, it may be 0.30 to 0.55 particles/cm².

The density of the precipitates or inclusions (P₂) present in the center portion 120 may be 0.001 to 0.40 particles/cm². More specifically, it may be 0.30 to 0.40 particles/cm².

The density of the precipitates or inclusions (P₃) present in the edge portion 130 may be 0.001 to 0.55 particles/cm². More specifically, it may be 0.30 to 0.55/cm².

A grain-oriented electrical steel sheet according to an embodiment of the present disclosure has excellent core loss and magnetic flux density, while at the same time having a very small core loss and magnetic flux density deviation in the width direction.

A grain-oriented electrical steel sheet according to an embodiment of the present disclosure may have a magnetic flux density (B₈) of 1.90T or more and a core loss (W_{17/50}) of 0.90 W/kg or less. At this time, the magnetic flux density B₈ is the magnitude (Tesla) of the magnetic flux density induced under a magnetic field of 800 A/m, and the core loss W_{17/50} is the magnitude (W/kg) of the core loss induced under conditions of 1.7 Tesla and 50 Hz. More specifically, the magnetic flux density (B₈) may be 1.91 T to 1.95 T, and the core loss (W_{17/50}) may be 0.75 to 0.85 W/kg.

The grain-oriented electrical steel sheet according to an embodiment of the presen disclosure may have a ratio (W2/W1) of the core loss (W2) at the center portion to the core loss (W1) at the upper edge portion of 0.99 to 1.03. Additionally, the ratio (B2/B1) of the magnetic flux density (B2) of the center portion to the magnetic flux density (B1) of the upper edge portion may be 0.99 to 1.01.

Additionally, the adhesion of the forsterite film is excellent. Adhesion can be measured as the minimum arc diameter that does not cause film peeling when bent 180° around an arc of a certain diameter. Specifically, the adhesion of the forsterite film may be 20 mmΦ or less.

Specific examples of the present disclosure are described below. However, the following examples are for illustrative purposes only and are not intended to limit the scope of the present disclosure.

### Example 1

A slab including, in wt%, C: 0.058%, Si: 3.32%, Mn: 0.105%, N: 0.0056%, Sb: 0.03%, Sn: 0.05%, P: 0.02%, and the balance Fe and unavoidable impurities was prepared. The slab was then heated to 1150°C, hot-rolled to a thickness of 2.3 mm, subsequently rapidly cooled to 600°C, and finally coiled. The hot-rolled sheet was annealed at 1080°C, pickled, and then cold-rolled once to a thickness of 0.20 mm. Decarburization annealing was performed on cold-rolled sheets under the conditions specified in Table 1, with varying nitriding conditions applied to the upper edge portion, center portion, and lower edge portion. In Table 1, the nitriding gas flow rate refers to the mass of nitriding gas injected per unit area per unit time. At this time, the amount of oxygen in the steel sheet is 900 to 1100 ppm. Afterwards, the annealing separator MgO was dried and wound into a coil. Subsequently, the temperature was raised to 1200°C at a heating rate of 15°C/hr, followed by secondary recrystallization annealing at 1200°C for 20 hours. An insulating coating was then applied in a continuous line, and heat treatment was performed at 850°C. Secondary recrystallization annealing was carried out in a mixed gas atmosphere of 25 v% N₂ and 75 v% H₂ up to 1200°C. Upon reaching 1200°C, the atmosphere was maintained in a 100 v% H₂ gas atmosphere, and then slowly cooled.

After nitride-annealing and secondary recrystallization annealing, the precipitate or inclusion density was analyzed at 1/4t of the steel sheet thickness. This analysis was performed using an image analyzer on 10 photographs obtained using the replica method, with the results summarized in Table 2.

The precipitate or inclusion density of the final grain-oriented electrical steel sheet was measured, and the results are summarized in Table 3. In addition, 10 specimens were prepared from each section of the upper edge portion, center portion, and lower edge portion by cutting them into Epstein specimen sizes [60 mm (W) X 300 mm (L)]. The magnetic flux density (B₈) and core loss (W_{17/50}) were measured, with the results summarized in Table 4. The deviation was calculated as the ratio of the core loss (W2) at the center portion to the core loss (W1) at the upper edge portion (W2/W1), and the ratio of the magnetic flux density (B2) at the center portion to the magnetic flux density (B1) at the upper edge portion (B2/B1).

The results of the adhesion evaluation of the forsterite film are shown in Table 4. Adhesion was measured as the minimum arc diameter without film peeling when bent 180° in contact with arcs of 10, 15, 20, 25, and 30 mm diameter.

**(Table 1)**

| | Decarburization condition | | Nitride gas flow rate | | | Am ount of nitrogen (ppm, center portion) |
|---|---|---|---|---|---|---|
| | Annealing temperature (°C) | Oxidativity (PH2O/PH2) | Upper edge portion/ Center portion | Lower edge portion/ Center portion | Lower edge portion/ Upper edge portion | |
| Example 1 | 850 | 0.58 | 1.35 | 1.29 | 0.96 | 145 |
| Example 2 | 850 | 0.58 | 1.33 | 1.17 | 0.88 | 178 |
| Example 3 | 850 | 0.58 | 1.20 | 1.10 | 0.92 | 202 |
| Example 4 | 850 | 0.58 | 1.05 | 1.05 | 1.00 | 231 |
| Example 5 | 850 | 0.58 | 1.04 | 1.04 | 1.00 | 252 |
| Comparative Example 1 | 850 | 0.58 | 0.80 | 0.80 | 1.00 | 208 |
| Comparative Example 2 | 850 | 0.58 | 1.45 | 1.35 | 0.93 | 199 |
| Comparative Example 3 | 850 | 0.58 | 1.70 | 2.30 | 1.35 | 105 |
| Comparative Example 4 | 850 | 0.40 | 1.10 | 1.05 | 0.95 | 288 |
| Comparative Example 5 | 850 | 0.85 | 0.85 | 0.90 | 1.06 | 209 |
| Comparative Example 5 | 850 | 0.58 | - | - | - | 62 |
| Example 6 | 850 | 0.58 | 1.35 | 1.35 | 1.00 | 204 |
| Example 7 | 850 | 0.45 | 1.10 | 1.05 | 0.95 | 225 |

**(Table 2)**

| | Density of precipitates or inclusions after nitride-annealing (particles/cm²) | | | P₂/P₁ | P₃/P₁ | P₂/P₃ |
|---|---|---|---|---|---|---|
| | Upper edge portion (P₁) | Center portion (P₂) | Lower edge portion (P₃) | | | |
| Example 1 | 0.57 | 0.43 | 0.51 | 0.75 | 0.89 | 0.84 |
| Example 2 | 0.51 | 0.44 | 0.48 | 0.86 | 0.94 | 0.92 |
| Example 3 | 0.43 | 0.39 | 0.41 | 0.91 | 0.95 | 0.95 |
| Example 4 | 0.45 | 0.42 | 0.43 | 0.93 | 0.96 | 0.98 |
| Example 5 | 0.63 | 0.48 | 0.57 | 0.76 | 0.90 | 0.84 |
| Comparative Example 1 | 0.78 | 0.42 | 0.75 | 0.54 | 0.96 | 0.56 |
| Comparative Example 2 | 0.92 | 0.4 | 0.68 | 0.43 | 0.74 | 0.59 |
| Comparative Example 3 | 0.68 | 0.44 | 0.87 | 0.55 | 1.28 | 0.51 |
| Comparative Example 4 | 0.99 | 0.6 | 0.78 | 0.51 | 0.79 | 0.77 |
| Comparative Example 5 | 0.24 | 0.28 | 0.27 | 1.17 | 1.13 | 1.04 |
| Comparative Example 6 | 0.02 | 0.008 | 0.01 | 0.40 | 0.50 | 0.80 |
| Example 6 | 0.67 | 0.43 | 0.66 | 0.64 | 0.99 | 0.65 |
| Example 7 | 0.72 | 0.48 | 0.64 | 0.67 | 0.89 | 0.75 |

**(Table 3)**

| | Densitiy of precipitates or inclusions in grain-oriented electrical steel sheet (particles/cm²) | | | P₂/P₁ | P₃/P₁ | P₂/P₃ |
|---|---|---|---|---|---|---|
| | Upper edge portion (P₁) | Center portion (P₂) | Lower edge portion (P₃) | | | |
| Example 1 | 0.452 | 0.352 | 0.382 | 0.78 | 0.85 | 0.92 |
| Example 2 | 0.385 | 0.268 | 0.335 | 0.70 | 0.87 | 0.80 |
| Example 3 | 0.373 | 0.327 | 0.368 | 0.88 | 0.99 | 0.89 |
| Example 4 | 0.346 | 0.298 | 0.302 | 0.86 | 0.87 | 0.99 |
| Example 5 | 0.402 | 0.278 | 0.356 | 0.69 | 0.89 | 0.78 |
| Comparative Example 1 | 0.654 | 0.291 | 0.575 | 0.44 | 0.88 | 0.51 |
| Comparative Example 2 | 0.691 | 0.252 | 0.534 | 0.36 | 0.77 | 0.47 |
| Comparative Example 3 | 0.524 | 0.298 | 0.637 | 0.57 | 1.22 | 0.47 |
| Comparative Example 4 | 0.776 | 0.420 | 0.657 | 0.54 | 0.85 | 0.64 |
| Comparative Example 5 | 0.298 | 0.255 | 0.312 | 0.56 | 1.05 | 0.82 |
| Comparative Example 6 | 0.080 | 0.102 | 0.129 | 1.28 | 1.61 | 0.79 |
| Example 6 | 0.522 | 0.358 | 0.510 | 0.69 | 0.98 | 0.70 |
| Example 7 | 0.488 | 0.325 | 0.428 | 0.67 | 0.88 | 0.76 |

**(Table 4)**

| | Core loss (W17/50, W/kg) | | | | Magnetic flux density (B8, T) | | | | Adhesion (mm φ) |
|---|---|---|---|---|---|---|---|---|---|
| | Uppe r edge portion | Center portion | Lowe r edge portion | Deviation | Upper edge portion | Center portion | Lowe r edge portion | Deviation | |
| Example 1 | 0.67 | 0.68 | 0.68 | 1.01 | 1.92 | 1.92 | 1.92 | 1.00 | 15 |
| Example 2 | 0.62 | 0.65 | 0.64 | 1.03 | 1.94 | 1.93 | 1.93 | 0.99 | 15 |
| Example 3 | 0.64 | 0.66 | 0.67 | 1.02 | 1.94 | 1.93 | 1.92 | 0.99 | 18 |
| Example 4 | 0.63 | 0.65 | 0.64 | 1.02 | 1.94 | 1.93 | 1.94 | 0.99 | 15 |
| Example 5 | 0.68 | 0.70 | 0.69 | 1.03 | 1.92 | 1.91 | 1.92 | 0.99 | 20 |
| Comparative Example 1 | 0.88 | 0.92 | 0.89 | 1.05 | 1.88 | 1.87 | 1.87 | 0.99 | 35 |
| Comparative Example 2 | 0.95 | 0.99 | 0.95 | 1.04 | 1.87 | 1.87 | 1.87 | 1.00 | 35 |
| Comparative Example 3 | 0.94 | 0.89 | 0.92 | 0.95 | 1.87 | 1.88 | 1.87 | 1.01 | 30 |
| Comparative Example 4 | 0.85 | 0.89 | 0.87 | 1.05 | 1.88 | 1.87 | 1.87 | 0.99 | 40 |
| Comparative Example 5 | 1.35 | 1.32 | 1.35 | 0.98 | 1.83 | 1.83 | 1.83 | 1.00 | 28 |
| Comparative Example 6 | 0.88 | 0.91 | 0.91 | 1.03 | 1.88 | 1.87 | 1.87 | 0.99 | 35 |
| Example 6 | 0.72 | 0.75 | 0.74 | 1.03 | 1.90 | 1.90 | 1.90 | 1.00 | 20 |
| Example 7 | 0.71 | 0.73 | 0.71 | 1.03 | 1.92 | 1.90 | 1.91 | 0.99 | 20 |

As can be seen in Tables 1 to 4, appropriately forming precipitates or inclusions in the upper edge portion 110, center portion 120, and lower edge portion 130 during nitride-annealing was confirmed to reduce core loss and magnetic deviation across the width of the steel sheet.

Conversely, it was confirmed that if precipitates or inclusions were not formed uniformly or adequately at the upper edge portion 110, center portion 120, and lower edge portion 130, significant core loss and magnetic deviation occurred across the width direction of the steel sheet.

The present disclosure may be embodied in many different forms, and should not be construed as being limited to the disclosed embodiments. In addition, it should be understood by those skilled in the art that various changes in form and details may be made thereto without departing from the technical spirit and essential features of the present disclosure. Therefore, it is to be understood that the above-described embodiments are for illustrative purposes only, and the scope of the present disclosure is not limited thereto.

**<Description of symbols>**

| | | | |
|---|---|---|---|
| 100: | Oriented electrical steel sheet | 101: | One end |
| 102: | Other end | 110: | Upper edge portion |
| 120: | Center portion | 130: | Lower edge portion |

## Claims

1. A method for manufacturing a grain-oriented electrical steel sheet, comprising:
manufacturing a slab including, in wt%, C: 0.01% to 0.1%, Si: 1.5% to 4.5%, and Mn: 0.1% to 1.5%, with the balance being Fe and inevitable impurities;
manufacturing a hot-rolled sheet by hot-rolling the slab;
manufacturing a cold-rolled sheet by cold-rolling the hot-rolled sheet;
nitride-annealing the cold-rolled sheet; and
performing secondary recrystallization annealing on a nitride-annealed steel sheet,
wherein after the nitride-annealing process, a ratio (P₂/P₁) of the number of precipitates and inclusions (P₂) present in a center portion exceeding 30% to 70% of the total width of the steel sheet, to the number of precipitates and inclusions (P₁) present in an upper edge portion extending from one end of the steel sheet to 30% of the total width thereof, is 0.6 to 1.0.

2. The method for manufacturing the grain-oriented electrical steel sheet of claim 1, wherein
the slab further comprises, in wt%, Al: 0.020% to 0.040%, N: 0.0030% to 0.0060%, and S: 0.0030% to 0.0065%.

3. The method for manufacturing the grain-oriented electrical steel sheet of claim 1, wherein
the slab further comprises, in wt%, Sb: 0.01% to 0.04%, Sn: 0.03% to 0.07%, and P: 0.01% to 0.04%.

4. The method for manufacturing the grain-oriented electrical steel sheet of claim 3, wherein
the slab satisfies the following Formula 1: $0.0330 \leq \left[P\right] + 0.5 \times \left[Sb\right] \leq 0.062$
(in Formula 1, [P] and [Sb] represent the content (wt%) of P and Sb, respectively, in the slab.)

5. The method for manufacturing the grain-oriented electrical steel sheet of claim 1, wherein
the slab further comprises, in wt%, at least one of Cu: 0.001% to 0.1% and Cr: 0.01% to 0.15%.

6. The method for manufacturing the grain-oriented electrical steel sheet of claim 1, wherein
after the nitride-annealing process, a ratio (P₃/P₁) of the number of precipitates and inclusions (P₃) present in a lower edge portion ranging from more than 70% of the total width from one end of the steel sheet to the other end thereof, to the number of precipitates and inclusions (P₁) present in the upper edge portion, is 0.7 to 1.0.

7. The method for manufacturing the grain-oriented electrical steel sheet of claim 1, wherein
in the nitride-annealing process, a ratio (AF₁/AF₂) of a flow rate of ammonia (AF₁) injected into the upper edge portion to a flow rate of ammonia (AF₂) injected into the center portion is 1.03 to 1.40.

8. The method for manufacturing the grain-oriented electrical steel sheet of claim 1, wherein
in the nitride-annealing process, a ratio (AF₃/AF₂) of a flow rate of ammonia (AF₃) injected into the lower edge portion to the flow rate of ammonia (AF₂) injected into the center portion is 1.03 to 1.40.

9. The method for manufacturing the grain-oriented electrical steel sheet of claim 1, wherein
a soaking temperature in the nitride-annealing process is 820 to 900°C.

10. The method for manufacturing the grain-oriented electrical steel sheet of claim 1, wherein
decarburization is performed simultaneously with nitriding in the nitride-annealing process, and the oxidation degree (P_{H2O}/P_{H2}) of the atmosphere during the decarburization is 0.45 to 0.75.

11. A grain-oriented electrical steel sheet, comprising:
in wt%, C: 0.005% or less (excluding 0%), Si: 1.5% to 4.5% and Mn: 0.1% to 1.5%, with the balance being Fe and inevitable impurities,
wherein a ratio (P₂/P₁) of the number of precipitates and inclusions (P₂) present in a center portion exceeding 30% to 70% of the total width of the steel sheet, to the number of precipitates and inclusions (P₁) present in an upper edge portion extending from one end of the steel sheet to 30% of the total width thereof, is 0.6 to 1.0.

12. The grain-oriented electrical steel sheet of claim 11, further comprising:
in wt%, Al: 0.040% or less, N: 0.0050% or less, and S: 0.005% or less.

13. The grain-oriented electrical steel sheet of claim 11, further comprising:
in wt%, Sb: 0.01% to 0.04%, Sn: 0.03% to 0.07%, and P: 0.01% to 0.04%.

14. The grain-oriented electrical steel sheet of claim 13, satisfying:
the following Formula 1. $0.0330 \leq \left[P\right] + 0.5 \times \left[Sb\right] \leq 0.062$
(wherein, in Formula 1, [P] and [Sb] represent the content (wt%) of P and Sb, respectively, in the steel sheet.)

15. The grain-oriented electrical steel sheet of claim 11, further comprising:
in wt%, at least one of Cu: 0.001% to 0.1% and Cr: 0.01% to 0.15%.

16. The grain-oriented electrical steel sheet of claim 11, wherein
a ratio (P₃/P₁) of the number of precipitates and inclusions (P₃) present in a lower edge portion ranging from more than 70% of the total width from one end of the steel sheet to the other end thereof, to the number of precipitates and inclusions (P₁) present in the upper edge portion, is 0.7 to 1.0.
